# EUROPÄISCHE PATENTSCHRIFT

(11) **EP 1 044 784 B1**
(45) Veröffentlichungstag und Bekanntmachung des Hinweises auf die Patenterteilung: **28.04.2004**
(21) Anmeldenummer: 00104046.8
(22) Anmeldetag: 26.02.2000
(51) Int. Cl.: B29C 49/56, B29C 33/22, B29C 45/32

(54) **Spannvorrichtung und -verfahren für Blasformen**
Process and device for clamping blow moulds
Procédé et dispositif de serrage pour moules de soufflage

(30) Priorität: 18.03.1999 DE 19912116
(43) Veröffentlichungstag der Anmeldung: 18.10.2000
(73) Patentinhaber: SIG Kautex GmbH & Co. KG, 53229 Bonn (DE)
(72) Erfinder: Daubenbüchel, Werner, 51491 Overath (DE); Kiefer, Erich, 53229 Bonn (DE); Friedrichs, Karsten, 53604 Bad Honnef (DE); Hess, Dieter, 53913 Swisttal (DE); Klüsener, Peter, 53179 Bonn (DE); Naumann, Ulrich, 58509 Lüdenscheid (DE)
(74) Vertreter: Lippert, Stachow, Schmidt & Partner

(56) Entgegenhaltungen:
- EP-A- 0 116 132
- EP-A- 0 438 721
- EP-A- 0 768 165
- EP-A- 0 879 690
- US-A- 3 880 565

## Beschreibung

Die Erfindung betrifft ein Verfahren und eine Vorrichtung zum Herstellen von Hohlkörpern aus thermoplastischem Kunststoff mittels Blasformen, wobei ein vorzugsweise schlauchförmiger Vorformling von einer wenigstens zwei Blasformteile aufweisenden Blasform aufgenommen und unter innerem Überdruck darin aufgeweitet wird und beide Teile der Blasform zwischen einem Offenzustand, in welchem sie einen Abstand voneinander aufweisen, und einem Schließzustand, in welchem sie ein Formnest begrenzen, dessen Kontur der Gestalt des aufgeweiteten Vorformlings entspricht, durch ein Bewegungen zwischen diesen Zuständen bewirkendes Antriebssystem hin- und herbewegt werden.

Es sind derartige Vorrichtungen bekannt, die mit einem Dreiplatten-Schließgestell versehen sind, welches nur ein Antriebsmittel für die Schließ- und Öffnungsbewegungen der Blasformteile aufweist. Das gemeinsame Antriebsmittel ist zwischen einer ersten, ein Blasformteil tragenden Trägerplatte und einer Antriebsplatte angeordnet, welche durch Holme oder dgl. mit einer zweiten, auf der anderen Seite der ersten Trägerplatte liegenden Trägerplatte verbunden ist, welche das andere Blasformteil trägt. Ein Betätigen des Antriebes in Schließrichtung hat zur Folge, daß, wenn ein am Grundrahmen der Vorrichtung fest angeordnetes Gleichlaufelement die Blasformteile oder deren Trägerplatten kinematisch miteinander verbindet, um synchrone Bewegungen der Blasformteile zu bewirken, sich die Blasformteile symmetrisch auf den Vorformling zu bewegen. Der Vorformling kann dabei am Extrusionskopf eines Extruders hängen, aber auch in anderer Weise, z. B. von einem Greifer, gehalten sein.

Derartige Dreiplatten-Schließgestelle weisen den Vorteil eines übersichtlichen und einfachen Aufbaus auf, zu welchem die Tatsache, daß für beide Formteile lediglich ein gemeinsamer Antrieb für die Durchführung der Öffnungs- und Schließbewegungen erforderlich ist, in erheblichem Maße beiträgt.

Schließgestelle mit mehr als drei Platten sind aus dem Stand der Technik bekannt z.B. EP-A-0 768 165, US-A-3 880 565, EP-A-0 438 721. Diese Schließgestell weisen allerdings einen auf wendigen Bewegungsmechanismus auf.

Der Erfindung liegt die Aufgabe zugrunde, Verfahren und Vorrichtung gemäß dem Oberbegriff des Anspruches 1 bzw. dem des Anspruches 4 so auszugestalten, daß die Produktivität einer derartigen Vorrichtung merklich erhöht wird, ohne daß der dazu erforderliche Mehraufwand entsprechend der Vergrößerung der Produktivität zunimmt.

Diese Aufgabe wird durch Anwendung der Mittel gelöst, die im Kennzeichen des Anspruches 1 bzw. dem des Anspruches 4 angegeben sind. Erfindungsgemäße Weiterbildungen sind in den abhängigen Ansprüchen angegeben.

Die erfindungsgemäße Lösung läßt sich am Beispiel einer zwei Blasformen aufweisender Vorrichtung dahingehend zusammenfassen, daß das Dreiplatten-Schließgestell mit einer zusätzlichen Trägerplatte versehen wird, die sich zwischen den beiden Trägerplatten herkömmlicher Dreiplatten-Schließgestelle befindet, wobei diese zusätzliche Trägerplatte zwei Formteile trägt, die jeweils mit einem der beiden von erster und zweiter Trägerplatte getragenen Formteilen eine Blasform bilden und beide so gebildeten Blasformen durch den gemeinsamen Antrieb wechselweise geöffnet und geschlossen werden und der Wechsel zwischen beiden Blasformen durch entsprechendes Betätigen von Verriegelungseinrichtungen erfolgt, mittels welcher die Teile einer Blasform fest miteinander verbunden werden können.

Auf diese Weise wird durch bloße Verdoppelung der Anzahl der Blasformen eine Verdoppelung der Kapazität bzw. Produktivität der Vorrichtung erreicht, ohne daß es notwendig wäre, auch andere Teile einer Blasformvorrichtung, also beispielsweise die Antriebe für die Formteile, zu verdoppeln. Da die jeweils verriegelte Blasform über die wenigstens eine zusätzliche, frei verschiebbare Trägerplatte mit dem von letzterer getragenen Teil der anderen Blasform verbunden ist, nimmt die verriegelte Blasform als geschlossene Einheit an den Öffnungs- und Schließbewegungen der jeweils anderen Blasform teil, so daß trotz des Vorhandenseins von insgesamt vier Platten die Kinematik eines Dreiplatten-Schließgestells beibehalten wird. Die Bestimmung derjenigen der beiden Blasformen, die bei Betätigung des gemeinsamen Antriebsmittels geöffnet und geschlossen wird, erfolgt durch entsprechende Steuerung der Verriegelungseinrichtungen, deren Teile an den Trägerplatten angebracht sein können.

Entsprechendes gilt für Ausführungen mit zwei oder mehr zusätzlichen Trägerplatten und somit drei oder mehr Blasformen. In allen Fällen kann für sämtliche Blasformen ein gemeinsames Antriebsmittel für die Durchführung der Öffnungs- und Schließbewegungen verwendet werden, wobei das Verschließen des Vorformlings an wenigstens einem Ende und das Abquetschen von überschüssigem Material auch durch dieses gemeinsame Antriebsmittel bewirkt werden. Somit kann die Verriegelungseinrichtung, die jeder Blasform zugeordnet ist, relativ einfach ausgeführt sein, da sie lediglich wirksam wird, nachdem die Blasform geschlossen worden ist.

Es ist auch möglich, zusätzlich zum gemeinsamen Antriebsmittel eine Antriebseinrichtung vorzusehen, die in der letzten Phase der Schließbewegung der Blasformteile wirksam ist und wenigstens einen Teil der Kräfte aufbringt, die für das Abquetschen des überschüssigen Materials am Vorformling und für das Schließen des Vorformlings durch Verschweißen benötigt werden. Diese zusätzliche Antriebseinrichtung wird wechselweise für alle Blasformen benutzt, so daß sie ebenfalls nur einmal vorhanden zu sein braucht.

Selbstverständlich ist es erforderlich, daß auch die Kapazität jener Vorrichtung entsprechend der Anzahl der Blasformen vergrößert wird, die die Vorformlinge liefert, die in den Blasformen aufgeweitet werden.

In der Zeichnung sind drei Ausführungsbeispiele der Erfindung mit jeweils zwei Blasformen im Schema dargestellt. Es zeigen:
- Fig. 1A: die Blasformmaschine eines ersten Ausführungsbeispiels in vier aufeinanderfolgenden Betriebszuständen,
- Fig. 2A bis 2F: die Blasformmaschine eines zweiten Ausführungs beispiels in sechs aufeinanderfolgenden Betriebszuständen,
- Fig. 3A bis 3D: die Blasformmaschine eines dritten Ausführungsbeispiels in vier aufeinanderfolgenden Betriebszuständen.

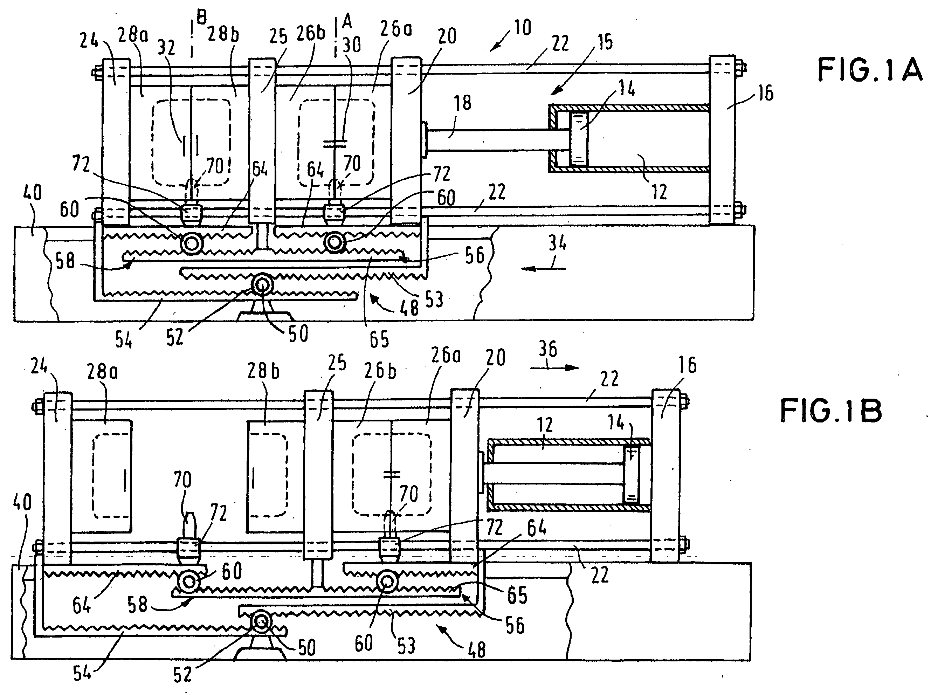

Das in Fig. 1A bis 1D dargestellte Dreiplatten-Schließgestell 10 weist eine aus Zylinder 12 und Kolben 14 bestehende hydraulische Antriebseinheit 15 auf, deren Zylinder 12 von einer Antriebsplatte 16 getragen wird, während die Kolbenstange 18 des Kolbens 14 mit einer in einem Abstand von der Antriebsplatte 16 angeordneten ersten Trägerplatte 20 verbunden ist. Die Antriebsplatte 16 ist über Holme 22 mit einer zweiten Trägerplatte 24 verbunden, die sich an der der Antriebsplatte 16 abgekehrten Seite der ersten Trägerplatte 20 befindet. Zwischen erster Trägerplatte 20 und zweiter Trägerplatte 24 ist eine dritte Trägerplatte 25 angeordnet, die, wie die erste Trägerplatte 20, an den Holmen 22 geführt und diesen gegenüber frei verschiebbar ist.

Erste Trägerplatte 20 und zweite Trägerplatte 24 tragen jeweils an ihrer der dritten Trägerplatte 25 zugekehrten Seite ein Formteil 26a bzw. 28a, das mit einem von der dritten Trägerplatte 25 getragenen Formteil 26b bzw. 28b jeweils zusammenwirkt und mit diesem eine erste Blasform 26a, 26b bzw. eine zweite Blasform 28a, 28b bildet. Beide Blasformen 26a, 26b; 28a, 28b sind mit einer Verriegelungseinrichtung 30 bzw. 32 versehen, die in der Zeichnung lediglich schematisch angedeutet ist. Die Funktion dieser Verriegelungseinrichtungen besteht darin, die beiden Blasformteile 26a, 26b bzw. 28a, 28b jeder Blasform in geschlossenem Zustand miteinander zu verriegeln derart, daß die aus dem Blasdruck beim Aufweiten des in der Blasform befindlichen Vorformlings resultierenden Kräfte die beiden Blasformteile nicht auseinanderbewegen können.

Die Verriegelungseinrichtungen können in unterschiedlicher Weise ausgebildet sein. Einmal besteht die Möglichkeit, die die Verriegelungseinrichtung bildenden Komponenten an den Formteilen 26a, 26b; 28a, 28b anzubringen. Eine andere Möglichkeit besteht darin, die Komponenten der Verriegelungseinrichtung an den Trägerplatten 20/25 bzw. 25/24 anzubringen.

Die erstgenannte Möglichkeit hat den Vorteil, daß die Verriegelungseinrichtung außerhalb der Blasformmaschine eingerichtet werden kann, so daß sie, nachdem die Blasformteile an den Trägerplatten angebracht worden sind, immer exakt eingestellt ist und somit nach einem Wechsel der Blaform keine ins Gewicht fallenden Arbeiten erforderlich sind, um die Verriegelungseinrichtung an die jeweiligen Gegebenheiten anzupassen .

Der Vorteil bei Anbringung der Verriegelungseinrichtung an den Trägerplatten ist darin zu sehen, daß die Komponenten bei einem Wechsel der Blasform an den Platten verbleiben können, da die Verriegelungseinrichtung Bestandteil der Blasformmaschine ist. Andererseits besteht aber im Normalfall die Notwendigkeit, nach einem Wechsel der Blasform die Verriegelungseinrichtung exakt einzustellen, um sie an das jeweilige Werkzeug anzupassen. Dies verlangt qualifiziertes und sorgfältig arbeitendes Personal.

Für beide Versionen gibt es im Stand der Technik zahlreiche Vorbilder, so daß es nicht erforderlich ist, weitere Einzelheiten anzugeben, zumal es für den Fachmann selbstverständlich ist, daß eine Verriegelungseinrichtung normalerweise aus mindestens zwei Verriegelungskomponenten besteht, welche nach Möglichkeit symmetrisch zur Blasform angeordnet sein sollten.

Ausgehend von der in Fig. 1A dargestellten Position der Teile, in welcher beide Blasformen 26a, 26b und 28a, 28b geschlossen und Kolben 14 sowie Zylinder 12 der Antriebseinheit 15 auseinandergefahren sind, sei angenommen, daß in der ersten Blasform 26a, 26b noch der für das Aufweiten und während der anschließenden Abkühlphase erforderliche Innendruck vorhanden ist, so daß die Verriegelungseinrichtung 30 ihre wirksame Position einnimmt und beide Blasformteile miteinander verriegelt. Hingegen ist die Verriegelungseinrichtung 32 der zweiten Blasform 28a, 28b unwirksam gestellt, so daß bei der anschließenden Betätigung der Antriebseinheit 15, bei welcher die der Antriebsplatte 16 abgekehrte Fläche des Kolbens 14 und die gegenüberliegende Zylinderfläche beaufschlagt werden, die Trägerplatte 20 mit der geschlossenen Blasform 26, der Zwischenplatte 25 und dem Blasformteil 28b aufgrund der entsprechenden Bewegung des Kolbens 14 im Zylinder 12 nach rechts, also in Richtung des Pfeiles 36 verschoben wird. Durch die Wirkung der Gleichlaufeinrichtung 48 erfolgt gleichzeitig und symmetrisch zur Bewegung der Trägerplatte 20 die entgegengesetzte Bewegung der Trägerplatte 24 und durch die starre Verbindung mit den Holmen 22 auch der Antriebsplatte 16 in Richtung des Pfeiles 34 nach links, so daß sich das Werkzeug 28a, 28b öffnet.

In der in Fig. 1B dargestellten geöffneten Position der Blasform 28a, 28b wird, nachdem der im vorangegangenen Arbeitszyklus hergestellte Hohlkörper aus der Blasform entfernt worden war, der Vorformling für den nächsten Arbeitzyklus zur Herstellung eines Hohlkörpers in die Blasform, d.h., zwischen die beiden Blasformteile 28a, 28b gebracht. Die Blasform 28a, 28b befindet sich dabei in der Aufnahmeposition B, in welcher sich oberhalb der Blasform z. B. der Extrusionskopf einer Extrusionseinrichtung befindet, falls der Vorformling unmittelbar durch diese Extrusionseinrichtung in die geöffnete Blasform 28a, 28b eingebracht wird.

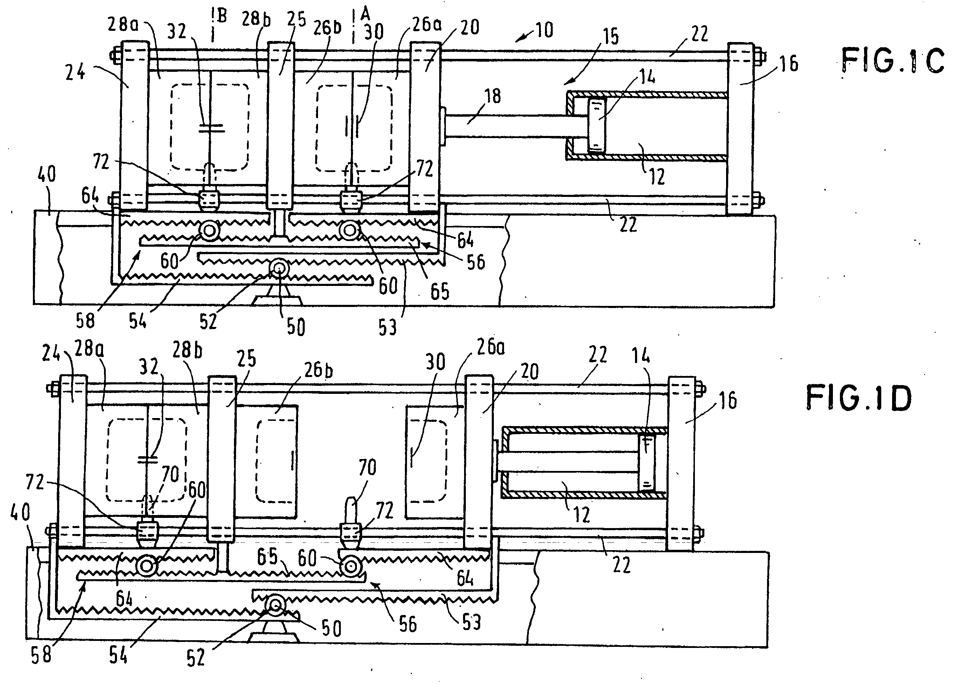

Wenn der Vorformling seine richtige Position einnimmt und/oder seine erforderliche Länge aufweist, wird die zweite Blasform durch Zusammenfahren der beiden Blasformteile 28a, 28b geschlossen. Dies erfolgt durch entsprechende Betätigung der hydraulischen Antriebseinheit 15 derart, daß der Kolben 14 an seiner der Antriebsplatte 16 zugekehrten Seite und die dieser Seite gegenüberliegende Stirnseite des Zylinders 12 beaufschlagt werden mit der Folge, daß die Teile des Schließgestells einen Bewegungsablauf erfahren, der dem entgegengesetzt ist, durch welche die Teile des Schließgestells von der Position gemäß Fig. 1A in die gemäß Fig. 1B gebracht wurden. Dies bedeutet, daß die Antriebsplatte 16 nach rechts in die Position gemäß Fig. 1A bzw. 1C verschoben wird, wobei die zweite Trägerplatte 24 mit dem Formteil 28a eine entsprechende Bewegung durchführt. Gleichzeitig wird die dritte Trägerplatte 25 mit dem daran befestigten Formteil 28b über die erste Trägerplatte 20 und die Formteile 26a, 26b nach links, also in Richtung des Pfeiles 34 verschoben, so daß am Ende beider Bewegungen die zweite Form 28a, 28b geschlossen ist und das Schließgestell die in Fig. 1C dargestellte Position einnimmt, die der Position gemäß Fig. 1A entspricht. Nach Beendigung dieser Schließbewegung, ggf. auch bereits kurz vorher, kann dann die Verriegelungseinrichtung 32 wieder wirksam gestellt werden, damit der nunmehr wirksame innere Überdruck, durch den der Vorformling in der Blasform aufgeweitet wird, die beiden Formteile 28a, 28b nicht auseinanderdrückt.

Abweichend von der in der Zeichnung dargestellten Ausführung kann eine zusätzliche Einrichtung vorgesehen sein, die wirksam wird, kurz bevor die Blasform vollständig geschlossen ist, um die Kräfte oder wenigstens einen Teil derselben aufzubringen, die für das Abquetschen von überschüssigem Material am Vorformling erforderlich sind. Dabei ist es zweckmäßig, für sämtliche Formen lediglich eine derartige Einrichtung vorzusehen, da ohnehin immer nur eine Form geschlossen wird.

In Abhängigkeit von der Zeit, die erforderlich ist, um den in der Blasform aufgeweiteten Vorformling so weit abzukühlen, daß er selbsttragend ist, kann dann entweder unmittelbar nach dem Verriegeln der zweiten Blasform 28a, 28b oder auch in einem bestimmten Zeitabstand davon die erste Blasform 26a, 26b geöffnet werden. Dazu wird die Entriegelungseinrichtung 30 dieser Blasform zunächst unwirksam gestellt, wie dies in Fig. 1C angedeutet ist. Alsdann können durch entsprechende Betätigung der Antriebseinheit 15 die beiden Blasformteile 26a, 26b auseinanderbewegt werden, so daß die Blasform 26a, 26b ihre in Fig. 1D dargestellte Offenposistion einnimmt. Nunmehr kann der aufgeweitete und ausreichend abgekühlte Hohlkörper aus der Blasform 26a, 26b herausgenommen und anschließend ein Vorformling für den nächsten Arbeitszyklus in die offene erste Blasform eingebracht werden. Danach kann dann die Blasform 26a, 26b durch entsprechende Betätigung der Antriebseinheit 15 um den Vorformling wieder geschlossen werden, so daß die Teile am Ende des Schließvorganges wieder die in Fig. 1A dargestellte Lage einnehmen. Als nächster Schritt erfolgt dann das bereits im Zusammenhang mit den Fig. 1A und 1B geschilderte Öffnen der Blasform 28a, 28b.

Bei den Schließ- und Öffnungsbewegungen der Blasformteile ist es insbesondere bei Verwendung eines hydraulischen Antriebssystems im allgemeinen erforderlich, daß diese Bewegungen bezüglich einer Bezugsebene des Grundrahmens der Blasformmaschine definiert und jederzeit reproduzierbar ablaufen, beispielsweise derart, daß sie sich symmetrisch auf die Mittelebene eines in der Mitte zwischen ihnen befindlichen Vorformlings hin bzw. sich von dem daraus durch Aufweiten hergestellten Hohlkörper weg bewegen. Im allgemeinen ist die Anordnung so getroffen, daß die Gleichlaufeinrichtung wenigstens ein mechanisches Verbindungselement aufweist, das am Grundrahmen der Blasformmaschine angebracht ist und durch welches die Blasformteile miteinander kinematisch gekoppelt sind. Das mechanische Verbindungselement wird dabei normalerweise stationär angeordnet sein. Es besteht aber auch die Möglichkeit, es zur zusätzlichen Beeinflussung der Öffnungsund/oder Schließbewegungen verschiebbar anzuordnen.

Die Ausführung gemäß den Fig. 1A bis 1D ist mit einer Gleichlaufeinrichtung 48 versehen, die ein drehbar auf einer Achse 50 gelagertes Zahnrad 52 aufweist, das mit Zahnstangen 53, 54 in Eingriff ist, von denen die Zahnstange 53 mit der ersten Trägerplatte 20 und die Zahnstange 54 mit der zweiten Trägerplatte 24 verbunden ist. Diese Gleichlaufeinrichtung kann auch so ausgebildet und angeordnet sein, daß die Zahnstange 53 mit der Antriebsplatte 16 und die Zahnstange 54 mit der ersten Trägerplatte 20 verbunden ist. Es kommt lediglich darauf an, daß diese beiden Bauteile, auf welche die Antriebseinheit mittelbar oder unmittelbar einwirkt, kinematisch über die Gleichlaufeinrichtung miteinander verbunden sind. Das Zahnad 50 der Gleichlaufeinrichtung ist am Grundrahmen 40 befestigt, auf welchem auch die Trägerplatten des Schließgestells 10 verschiebbar geführt sind. Aus Gründen der besseren Übersichtlichkeit sind die Führungen für die Trägerplatten und ggf. die Holme 22 nicht dargestellt.

Die Gleichlaufeinrichtung 48 ist somit für beide Blasformen 26a, 26b und 28a, 28b wechselweise wirksam, da beim jeweiligen Schließen und Öffnen der beiden Blasformen die vorgenannte Bedingung erfüllt ist. Beim Öffnen oder Schließen der Blasform 26a, 26b ist das Blasformteil 26a unmittelbar mit der ersten Trägerplatte 20 verbunden, auf welche die Kolbenstange des Kolbens 14 direkt einwirkt, wohingegen das zweite Blasformteil 26b fest an der dritten Trägerplatte 25 angebracht ist, die ihrerseits über das Blasformteil 28b der zweiten Blasform, die Verriegelungseinrichtung 32 und das Blasform 28a fest mit der zweien Trägerplatte 24 verbunden ist, die ihrerseits über die Holme 22 mit der Antriebsplatte 16 verbunden ist, auf welcher der Zylinder 12 der Antriebseinheit 15 einwirkt.

Entsprechendes gilt für die zweite Blasform 28a, 28b, deren Teil 28a von der zweiten Trägerplatte 24 getragen wird und somit mit der Antriebsplatte 16 verbunden ist, wohingegen das andere Blasformteil 28b beim Öffnen und Schließen über die dritte Trägerplatte 25 und die Blasformteile 26a, 26b fest mit der ersten Trägerplatte 20 verbunden ist, an welcher die Kolbenstange angreift.

Normalerweise sind jeder Blasform noch zusätzliche Funktionselemente zugeordnet, die bei der Formung des innerhalb der Blasform herzustellenden Hohlkörpers mitwirken und ggf. auch noch zusätzliche Funktionen haben, beispielsweise die der Zuführung des Druckmittels in den Vorformling hinein. Es kann sich dabei z. B. um einen Blasdorn 70 handeln, der von einer Halterung 72 getragen ist und z. B. in das untere Ende des im allgemeinen schlauchförmigen Vorformlings hineinragt und in vielen Fällen dazu benutzt wird, einen kleinen Abschnitt des Vorformlings mittels Preßformen z. B. zu einem Stutzen oder dgl. zu formen. Derartige Funktionsteile müssen im allgemeinen ebenfalls in definierter Weise zu den Blasformteilen ausgerichtet sein und ggf. auch während des Schließ- und/oder öffnungsvorganges dazu ausgerichtet bleiben, damit beispielsweise gewährleistet ist, daß der in die offene Blasform eingeführte schlauchförmige Vorformling in bestimmter Weise über den wenigstens einen Blasdorn geführt wird. Dazu kann es erforderlich sein, daß diesen Funktionsteilen jeder Blasform eine besondere Gleichlaufeinrichtung 56 bzw. 58 zugeordnet ist, die ebenfalls ein Zahnrad 60 und zwei Zahnstangen 64, 65 aufweist, wobei jede der beiden Zahnstangen 64, 65 jeweils mit einer der beiden Trägerplatten 20, 25 bzw. 24, 25 der jeweiligen Blasform verbunden ist. An jeder der beiden oberen Zahnstangen 64 ist eine Halterung 72 für den jeweiligen Blasdorn 70 befestigt, so daß über die beiden Gleichlaufeinrichtungen 56 bzw. 58 die richtige Position des Bladornes 70 zur jeweils zugehörigen Blasform 26a, 26b; 28a, 28b gewährleistet ist. Eine stationäre Anordnung der die Zahnräder 60 tragenden Halterungen 72 beider Gleichlaufeinrichtungen 56, 58 ist nicht erforderlich, da durch die beiden Blasformen gemeinsame Gleic hlaufeinrichtung 48 die richtige Position des jeweiligen Zahnrades 60 gewährleistet ist und die Gleichlaufeinrichtungen 56, 58 nicht den Gleichlauf der jeweils zugehörigen Formteile, sondern die richtige Position des jeweiligen Blasdornes 70 gewährleisten sollen.

Ein Vergleich zwischen den Figuren 1A und 1B einerseits und den Figuren 1C und 1D andererseits zeigt, daß die Zahnräder 60 jeder Blasform bei den Öffnungs- und Schließbewegungen der jeweils anderen Blasform in Öffnungs- bzw. Schließrichtung verschoben werden. Da die Zahnräder 60 nicht befestigt sind, bedarf es keiner besonderen Maßnahmen erforderlich, um diese Bewegungen der Zahnräder 60 zu ermöglichen.

Bei dem vorstehend im Zusammenhang mit den Fig. 1A bis 1D beschriebenen Ausführungsbeispiel hat jede Blasform ihre eigene Aufnahmeposition A bzw. B, in welcher der Vorformling in die jeweilige Blasform eingeführt wird. Schließ- und Öffnungsbewegungen der Blasformteile erfolgen, wenn keine besonderen Vorkehrungen getroffen werden, symmetrisch. Eine Verschiebung der Blasform gegenüber der jeweils zugehörigen Aufnahmestation erfolgt lediglich in geschlossenem Zustand dieser Blasform, nämlich im Zuge der Öffnungs- und Schließbewegungen der jeweils anderen Blasform.

Das Vorhandensein von zwei Aufnahmestationen A und B setzt somit voraus, daß in beiden Stationen auch Zuführeinrichtungen für die Vorformlinge vorhanden sind. Wenn für beide Blasformen nur ein gemeinsames Extrusionssystem zur Herstellung der Vorformlinge vorgesehen ist, kann die Anordnung so getroffen sein, daß der Extrusionskopf dieser Extrusionseinrichtung zwischen den beiden Aufnahmestationen A und B hin- und herbewegbar ist. Eine andere Möglichkeit besteht darin, den Extrusionskopf des gemeinsamen Extrusionssystems stationär anzuordnen und den Vorformling mittels wenigstens einer Transporteinrichtung vom Extrusionskopf in die jeweilige Aufnahmestation A bzw. B zu bewegen. Beide Möglichkeiten sind dem Fachmann geläufig, so daß sie keiner besonderen Erläuterung bedürfen.

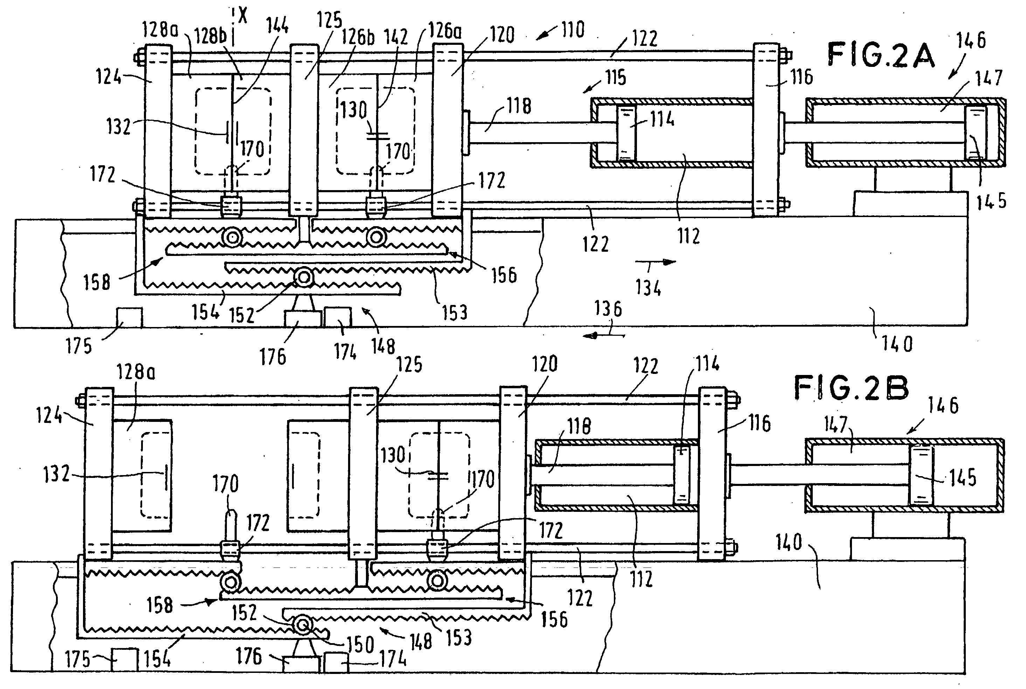

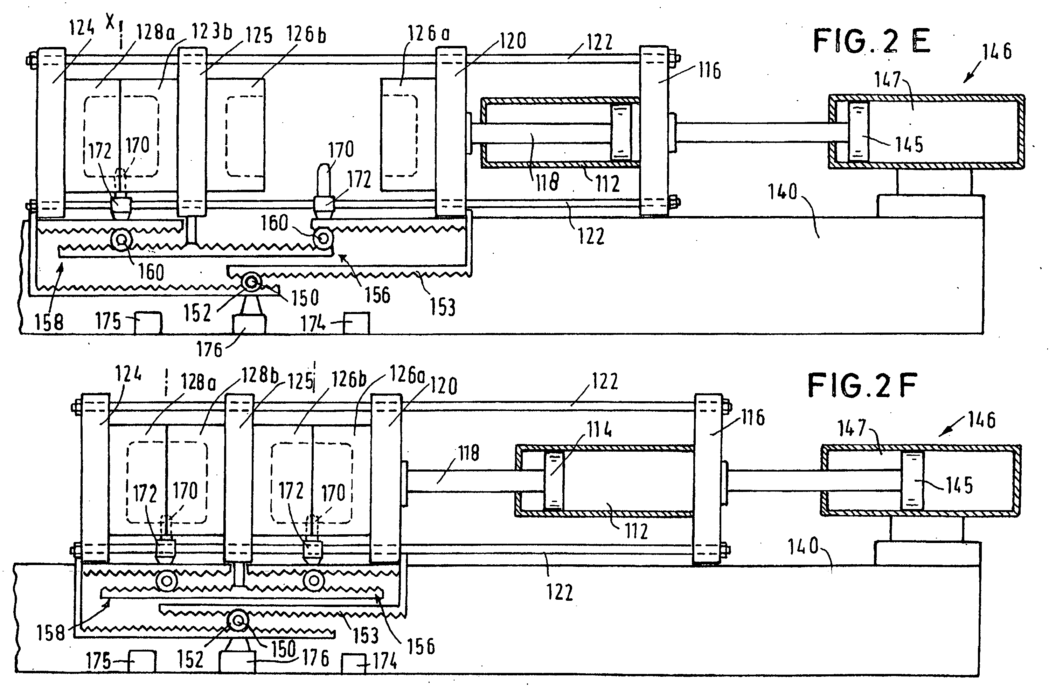

Das Ausführungsbeispiel gemäß den Fig. 2A bis 2F stimmt bezüglich seines Grundaufbaus mit dem gemäß den Fig. 1A bis 1D überein, so daß für gleiche Teile auch gleiche Bezugszeichen verwendet werden, die bei dem Ausführungsbeispiel gemäß den Fig. 2A bis 2F jedoch um 100 höher sind.

Der wesentliche Unterschied zwischen beiden Ausführungen besteht darin, daß das Dreiplatten-Schließgestell der Ausführung gemäß den Fig. 2A bis 2F in seiner Gesamtheit in Richtung der Pfeile 134 und 136 gegenüber dem das Schließgestell tragenden Grundrahmen 140 in horizontaler Ebene verschiebbar ist. Das Ausmaß dieser Verschiebung entspricht dem Abstand zwischen den beiden Trennflächen 142 bzw. 144 der beiden Blasformen 126a, 126b und 128a, 128b. Der Abstand zwischen den beiden Trennflächen 142 und 144 ergibt sich aus der Dicke der Formteile 126a, 126b, also deren Erstreckung in Richtung der Schließund Öffnungsbewegungen, sowie der Dicke der dritten Trägerplatte 125. Diese Verschiebbarkeit des Schließgestelles 110 in seiner Gesamtheit ermöglicht es, für beide Blasformen eine gemeinsame Aufnahmestation X vorzusehen, so daß die Notwendigkeit entfällt, die Vorformlinge wechselweise zu zwei Aufnahmestationen zu transportieren bzw. den Extrusionskopf zwischen den beiden Aufnahmestationen A und B der Ausführungsform gemäß den Fig. 1A bis 1D hin- und herzubewegen. Die Verschiebbarkeit des Schließgestelles führt bei der Ausführungsform gemäß den Fig. 2A bis 2F dazu, daß der Grundrahmen länger ist als bei dem Ausführungsbeispiel gemäß den Fig. 1A bis 1C.

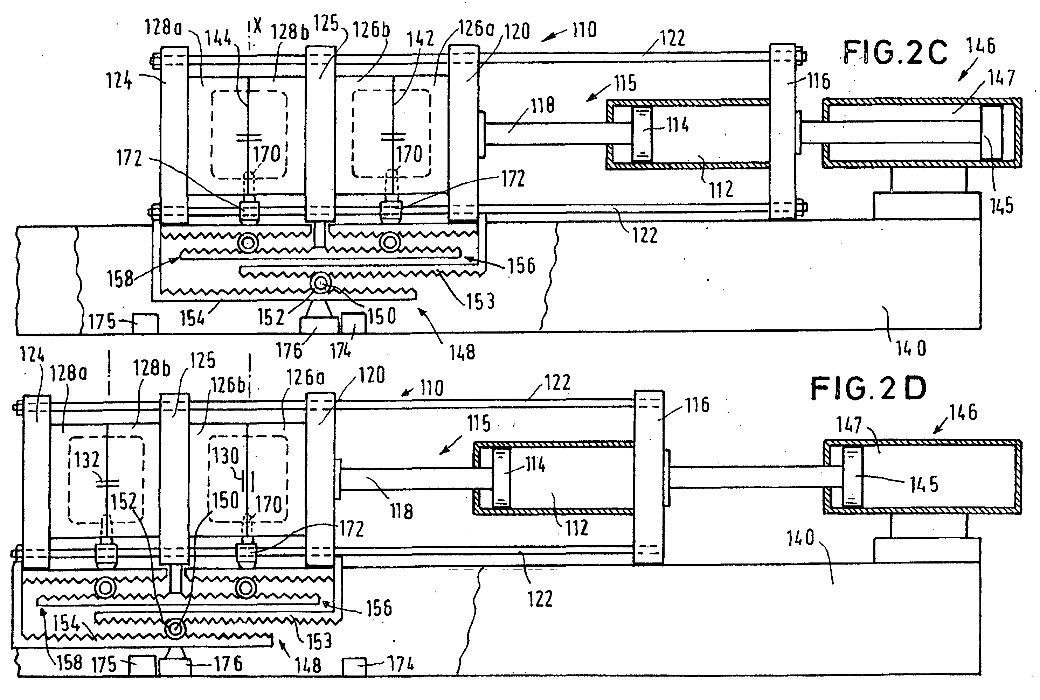

Der in den Fig. 2A bis 2C dargestellte Arbeitsablauf entspricht im wesentlichen dem der Fig. 1A bis 1C: Die Blasform 128a, 128b, die sich in der Aufnahmestation befindet, wird entriegelt (Fig. 2A) und durch entsprechende Betätigung der Antriebseinheit 115 geöffnet und nach Entnahme des im vorangegangenen Arbeitsarbeitszyklus hergestellten Erzeugnisses und anschließendem Einbringen eines Vorformlings für den nächsten Arbeitszyklus wieder geschlossen und verriegelt (Fig. 2C). Während dieser Arbeitsschritte hat das Schließgestell in seiner Gesamtheit seine Position gegenüber dem Grundrahmen 140 nicht geändert.

Nach Erreichen des in Fig. 2C dargestellten Betriebszustandes, also nach dem Schließen der Blasform 128a, 128b, wird das Schließgestell in seiner Gesamtheit in Richtung des Pfeiles 134 um einen Weg verschoben, der dem Abstand zwischen den beiden Trennflächen 142 und 144 der beiden Blasformen entspricht mit dem Ergebnis, daß sich am Ende dieser Bewegung in Richtung des Pfeiles 134 die Blasform 126a, 126b in der Aufnahmestation X befindet, wie dies Fig. 2D zeigt. Für die Durchführung dieser Bewegung des Schließgestelles ist es gleichgültig, ob die beiden Blasformen 126a, 126b und 128a, 128b verriegelt sind, da zur Durchführung dieser Bewegung ein zweiter Antrieb 146 vorgesehen ist, der bei der in den Fig. 2A bis 2F dargestellten Ausführung ebenfalls als Zylinder-Kolben-Einheit ausgebildet ist und an der Antriebsplatte 116 angreift. Der Antrieb 146 kann aber auch in anderer Weise ausgebildet und mit einem anderen Teil des Schließgestelles verbunden sein, beispielsweise mit der Halterung 176 für die Achse 150, die das Zahnrad 152 für die Gleichlaufeinrichtung 148 trägt. In diesem Falle ist der Verschiebeweg des zweiten Antriebes 146 bzw. des im Zylinder 147 desselben geführten Kolbens 145 kleiner als bei Einwirkung auf die Antriebsplatte 116, da die Bewegungen der letzteren im Zusammenhang mit den Öffnungs- und Schließbewegungen der Blasformteile beim Hub des Kolbens 145 nicht berücksichtigt zu werden brauchen.

Nach Durchführung der Verschiebung in Richtung des Pfeiles 134 kann dann die nunmehr in der Aufnahmestation X befindliche Blasform 126a, 126b entriegelt und geöffnet werden, um den im vorangegangenen Arbeitszyklus hergestellten Hohlkörper aus der Form zu entfernen und den Vorformling für den nächsten Arbeitszyklus in die Blasform einzubringen. Danach wird die Blasform durch entsprechende Betätigung der ersten Antriebseinheit 15 wieder geschlossen und verriegelt, so daß die Teile die in Fig. 2F dargestellte Position einnehmen. Alsdann wird das Schließgestell in seiner Gesamtheit durch entsprechende Betätigung des zweiten Antriebs 146 in Richtung des Pfeiles 136 in die Position gemäß Fig. 2A zurückbewegt, in welcher sich wiederum die Blasform 128a, 128b in der Aufnahmestation X befindet. Es kann dann in der bereits im Zusammenhang mit Fig. 2A beschriebenen Weise weiterverfahren werden.

Das Ausführungsbeispiel gemäß den Fig. 2A bis 2F ist ebenfalls mit einer für beide Blasformen des Schließgestells wirksamen Gleichlaufeinrichtung 148 versehen, für die das bereits im Zusammenhang mit der Gleichlaufeinrichtung 48 der Ausführung gemäß den Fig. 1A bis 1D Gesagte gilt. Allerdings besteht ein Unterschied insoweit, als es erforderlich ist, das kinematische Verbindungsglied in Form des Zahnrades 152 der Gleichlaufeinrichtung 148 lösbar mit dem Grundrahmen 140 zu verbinden, um so der Tatsache Rechnung zu tragen, daß das Schließgestell 110 in seiner Gesamtheit verschiebbar ist, um die beiden Blasformen wechselweise in die Aufnahmestation X zu bewegen. Bei dem in den Fig. 2A bis 2F dargestellten Ausführungsbeispiel sind zwei einstellbare Anschläge 174, 175 vorgesehen, die mit der das Zahnrad 152 tragenden Halterung 176 zusammenwirken und den Weg begrenzen, den die Halterungen 176 und damit das Zahnrad 152 von der einen Position, in welcher sich die Blasform 128a, 128b in der Aufnahmestation X befindet (Fig. 2A bis 2C), in die zweite Position zurücklegt, in welcher sich die Blasform 126a, 126b in der Aufnahmestation befindet (vgl. Fig. 2D bis Fig. 2F).

Die Halterung 176 für das Zahnrad 152 ist in der jeweiligen Betriebsstellung durch geeignete Mittel, die in der Zeichnung nicht dargestellt sind, am Maschinenrahmen 140 lösbar zu befestigen. Die Anschläge 174 und 175 können ebenfalls lösbar am Maschinenrahmen 140 befestigt sein, so daß sie in Richtung der Pfeile 134, 136 in die jeweilige Position bewegt werden können, welche den Abstand zwischen den beiden Trennflächen 142 und 144 der beiden Blasformen entspricht. Auf diese Weise kann durch entsprechendes Verstellen der Anschläge 174 und 175 eine Anpassung an unterschiedliche Abstände zwischen den Trennflächen 142, 144 erfolgen, die sich aus unterschiedlichen Dimensionen unterschiedlicher Blasformen ergeben. Es ist somit ohne großen Arbeitsaufwand möglich, den Abstand zwischen den beiden Anschlägen 174, 175 an den Abstand der Trennflächen 142, 144 der jeweils an den Trägerplatten 120, 124, 125 angebrachten Blasformteile anzupassen.

Die Funktion der Gleichlaufeinrichtungen 156 und 158 stimmt überein mit der Funktion der entsprechenden Gleichlaufeinrichtungen der Ausführung gemäß den Fig. 1A bis 1D.

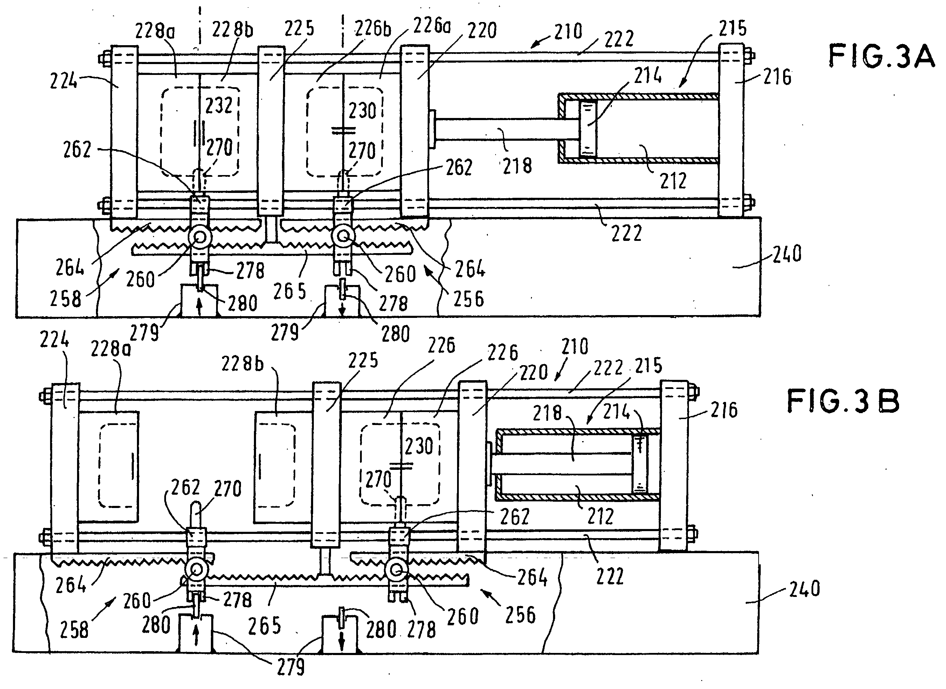

Das Ausführungsbeispiel gemäß den Fig. 3A bis 3D stimmt, abgesehen von der Ausgestaltung der Gleichlaufeinrichtung, weitgehend mit dem der Ausführungsform gemäß den Fig. 1A bis 1D überein, so daß für gleiche Teile auch gleiche Bezugszeichen verwendet werden, die jedoch in den Fig. 3A bis 3D um jeweils 200 größer sind.

Der einzige wesentliche Unterschied zwischen beiden Ausführungsformen besteht darin, daß bei der Ausführungsform gemäß Fig. 3A bis 3D die beiden Blasformen gemeinsame Gleichlaufeinrichtung 48 bzw. 148 fehlt und somit der Gleichlauf der beiden Formteile 226a, 226b bzw. 228a, 228b beider Blasformen durch die jeweiligen Gleichlaufeinrichtungen 256 bzw. 258 bewirkt wird. Demzufolge besteht - abweichend von den beiden vorstehend beschriebenen Ausführungsformen - die Notwendigkeit, die Halterung 262, welche das Zahnrad 260 trägt, während der Öffnungs- und Schließbewegungen der jeweils zugeordneten Blasform zu arretieren. Zu diesem Zweck ist jede Halterung 262 an ihrem der jeweiligen Blasform abgekehrten Ende mit einem gabelförmigen Fortsatz 278 versehen, dem eine Arretiereinrichtung in Form eines auf- und abbewegbaren Riegels 280 zugeordnet ist, welcher in seiner oberen Endposition in den gabelförmigen Fortsatz 278 eingreift und die jeweilige Halterung 262 arretiert, so daß das von dieser getragene Zahnrad 260 zwar rotieren, aber keine linearen Bewegungen in Richtung der von den Blasformteilen ausgeführten Öffnungs- und Schließbewegungen ausführen kann. Die Halterung 262 kann auch bei dieser Ausführung einen Blasform 270 tragen.

Fig. 3A zeigt einen Betriebszustand, bei welchem die Blasform 226a, 226b verriegelt und die Blasform 282a, 282b entriegelt ist, da sie geöffnet werden soll. Demzufolge ist die Halterung 262 für das Zahnrad 260 der Gleichlaufeinrichtung 258 arretiert, so daß sich der Riegel 280 der der zweiten Gleichlaufeinrichtung 258 zugeordneten Arretiereinrichtung in seiner wirksamen Stellung befindet, d.h. in dem gabelförmigen Fortsatz 278 der Halterung 262 eingreift. Demzufolge bewirkt die zweite Gleichlaufeinrichtung 258 den Gleichlauf der beiden Formteile 228a, 228b, wenn diese durch entsprechende Betätigung der hydraulischen Antriebseinheit 215 aus der Position gemäß Fig. 3A in die gemäß Fig. 3B gebracht werden. Wie die Fig. 3A und 3B zeigen, ist während der Öffnungsbewegung die Halterung 262 für das Zahnrad 260 der ersten Gleichlaufeinrichtung 256 entriegelt, da sich der Riegel 280 der Arretiereinrichtung 279 außer Eingriff mit dem gabelförmigen Fortsatz 278 der Halterung 262 der ersten Gleichlaufeinrichtung 256 befindet, die der Blasform 226a, 226b zugeordnet ist. Demzufolge kann die erste Gleichlaufeinrichtung 256 der durch das Öffnen der Blasform 228a, 228b bewirkten Bewegung der geschlossenen Blasform 226a, 226b ungehindert folgen.

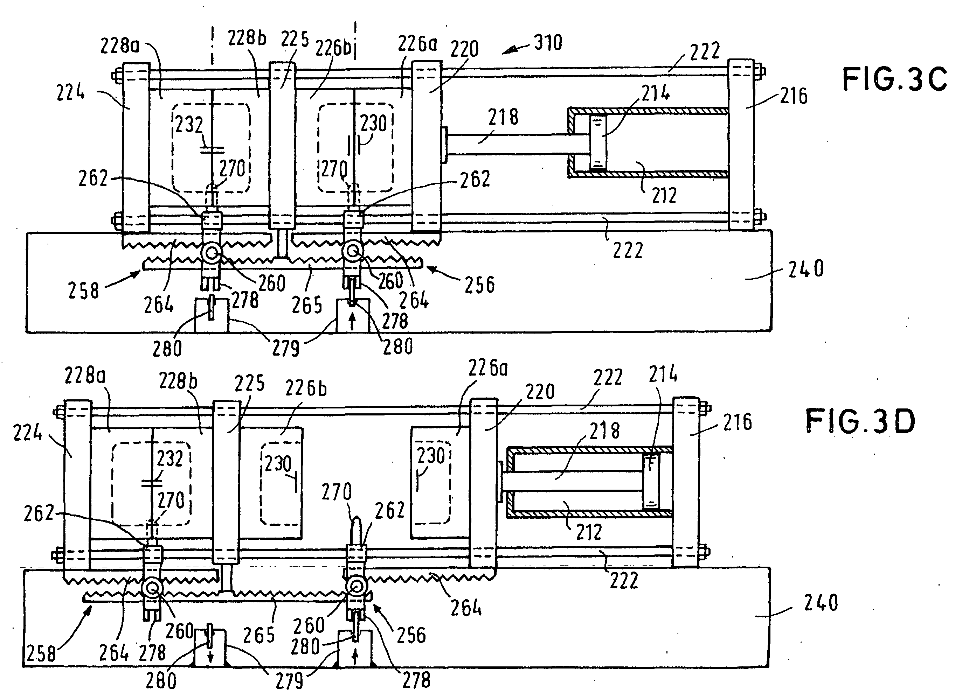

Entsprechendes gilt für die durch das Schließen der Blasform 228a, 228b bewirkte Bewegung der ersten Blasform 226a, 226b zurück in die in Fig. 3C dargestellte Ausgangsposition. Nunmehr wird die Halterung 262 für das Zahnrad 260 der ersten Gleichlaufeinrichtung 256 arretiert, indem der zugeordnete Riegel 280 nach oben in seine wirksame Position verschoben wird, wie dies in Fig. 3C dargestellt ist. Gleichzeitig kann die Arretierung der Halterung 262 der zweiten Gleichlaufeinrichtung 258 aufgehoben werden, indem der zueordnete Riegel 280 nach unten bewegt,und außer Eingriff mit dem zugehörigen gabelartigen Fortsatz 278 gebracht wird, wie dies ebenfalls in Fig. 3C dargestellt ist. Die Betätigungsmittel für die beiden Arretiereinrichtungen 279 können so ausgebildet sein, daß zwangsläufig die Halterung einer Gleichlaufeinrichtung arretiert wird, während gleichzeitig die Arretierung der jeweils anderen Gleichlaufeinrichtung aufgehoben wird.

Beim darauffolgenden Öffnen der Blasform 226a, 226b wird, wie dies Fig. 3D zeigt, die zweite Gleichlaufeinrichtung 258 mit der zugehörigen Blasform 228a, 228b gegenüber der Arretiereinrichtung 279 verschoben.

Es ist natürlich auch möglich, bei der Ausführungsform gemäß den Fig. 3A bis 3D lediglich eine beiden Blasformen gemeinsame Aufnahmestation X vorzusehen, wie dies bei der Ausführung gemäß den Fig. 2A bis 2F der Fall ist. Da dann die beiden Blasformen jeweils nur in der einen gemeinsamen Aufnahmestation geschlossen und geöffnet werden müssten, reicht es aus, nur eine Arretiereinrichtung für beide Gleichlaufeinrichtungen 256 und 258 vorzusehen, die dann der Aufnahmestation X zugeordnet wäre. Falls bei dieser Ausführungsform ebenfalls eine Verschiebung des Schließgestells 210 in seiner Gesamtheit analog der Ausführungsform gemäß den Fig. 2A bis 2F erfolgen solle, müßte ebenfalls ein zusätzlicher Antrieb analog dem Antrieb 146 vorgesehen sein.

Wenngleich bei den vorstehend beschriebenen Ausführungsformen ausschließlich hydraulische Antriebseinheiten vorgesehen sind, können auch andere Antriebsmittel, z. B. elektromotorische Antriebe, verwendet werden. Es sind auch Kombinationen denkbar derart, daß beispielsweise die Antriebseinheit für das Öffnen und Schließen der Blasformen elektromotorisch und die Antriebseinheit für das Verschieben des Schließgestells in seiner Gesamtheit hydraulisch betätigt wird.

Wenn vorstehend von "Antriebsplatte" und "Trägerplatte" die Rede ist, soll dies keine Beschränkung darstellen. Es können auch Elemente verwendet werden, die nicht plattenartig ausgebildet sind, wenngleich die genannten Bauteile in der Praxis überwiegend als Platten ausgebildet sind.

## Patentansprüche

1. Verfahren zum Herstellen von Hohlkörpern aus thermoplastischem Kunststoff mittels Blasformen von Vorformlingen unter Verwendung eines Schließgestells (10; 110; 210), das Blasformen mit zwei Blasformteilen (26a, 28a; 126a, 128a; 226a, 228a) aufweist, die zwischen einem Offenzustand, in welchem sie einen Abstand voneinander haben, und einem Schließzustand, in welchem sie ein Formnest begrenzen, durch ein gemeinsames Antriebsmittel (15) hin- und herbewegbar sind, das an einer Antriebsplatte (16; 116, 216) und einer ersten Trägerplatte (20; 120; 220) angreift und zwischen der Antriebsplatte und der ersten Trägerplatte angeordnet ist, die erste Trägerplatte ein Blasformteil (26a; 126a; 226a) trägt, und die Antriebsplatte (16; 116; 216) mit einer zweiten, ein Blasformteil (28a; 128a; 228) tragenden Trägerplatte (24; 124; 224) verbunden ist, **dadurch gekennzeichnet, daß** zwischen der ersten Trägerplatte (20; 120; 220) und der zweiten Trägerplatte (24; 124; 224) wenigstens eine weitere Trägerplatte (25; 125; 225) in Öffnungs- und Schließrichtung verschiebbar angeordnet ist, die an jeder ihrer Seiten ein Blasformteil (26b, 28b; 126b, 128b; 226b, 228b) trägt, und jedes dieser beiden Blasformteile mit einem Blasformteil, das jeweils von einer benachbarten Trägerplatte getragen wird, eine Blasform bildet und für jede der Blasformen (26a, b; 28a, b; 126a, b; 128a, b; 228a, b) eine Verriegelungs-Einrichtung (30, 32; 130, 132; 230, 232) vorgesehen ist, mittels welcher die jeweilige Blasform in ihrem Schließzustand verriegelt werden kann, und das Schließgestell (10; 110; 210) mit wenigstens einer Gleichlaufeinrichtung (48) versehen ist, durch welche die Schließ- und Öffnungsbewegungen der Teile der jeweiligen Blasform symmetrisch erfolgen, wobei mittels der Verriegelungs-Einrichtung der Bewegungsablauf der Trägerplatten gesteuert wird.

2. Verfahren nach Anspruch 1, **dadurch gekennzeichnet, daß** die Verriegelungseinrichtungen (30, 32; 130, 132; 230, 232) für jede Blasform zwischen den Trägerplatten (20, 25; 24, 25; 120, 125; 124, 125; 220, 225; 224, 225) der jeweiligen Blasform (26a, 26b; 28a, 28b; 126a, 126b; 128a, 128b; 226a, 226b; 228a, 228b) wirksam sind.

3. Verfahren nach Anspruch 1, **dadurch gekennzeichnet, daß** die Verriegelungseinrichtungen Bestandteil der Blasformen und unmittelbar zwischen den beiden Blasformteilen wirksam sind.

4. Verfahren nach Anspruch 1, **dadurch gekennzeichnet, daß** die Bewegung der Blasformteile (26a, 26b; 28a, 28b; 126a, 126b; 128a, 128b; 226a, 226b; 228a, 228b) zum verschließen des Vorformlings und/oder zum Abquetschen von überschüssigem Material am Vorformling durch das gemeinsame Antriebsmittel (15; 115; 215) für die Blasformteile bewirkt wird.

5. Verfahren nach Anspruch 1, **dadurch gekennzeichnet, daß** das Schließgestell (110) zwischen mindestens zwei Positionen verschoben werden kann derart, daß eine der wenigstens zwei Blasformen (126a, 126b; 128a, 128b) sich in einer gemeinsamen Aufnahmeposition (X) befindet, in welcher die jeweils dort befindliche Blasform einen Vorformling aufnimmt.

6. Vorrichtung zum Herstellen von Hohlkörpern aus thermoplastischem Kunststoff mittels Blasformen von Vorformlingen, die mit einem Schließgestell (10; 110; 210) versehen ist, das Blasformen mit zwei Blasformteilen (26a, 28a; 126a, 128a; 226a, 228a) aufweist, die zwischen einem Offenzustand, in welchem sie einen Abstand voneinander haben, und einem Schließzustand, in welchem sie ein Formnest begrenzen, durch ein gemeinsames Antriebsmittel (15) hin- und herbewegbar sind, wobei das Antriebsmittel (15) an einer Antriebsplatte (16; 116; 216) und einer ersten Trägerplatte (20; 120; 220) angreift und zwischen der Antriebsplatte und der ersten Trägerplatte angeordnet ist, die erste Trägerplatte ein Blasformteil (26a; 126a; 226a) trägt, und die Antriebsplatte (16; 116; 216) mit einer zweiten, ein Blasformteil (28a; 128a; 228a) tragenden Trägerplatte (24; 124; 224) verbunden ist, **dadurch gekennzeichnet, daß** zwischen der ersten Trägerplatte (20; 120, 220) und der zweiten Trägerplatte (24; 124; 224) wenigstens eine weitere Trägerplatte (25; 125; 225) in Öffnungs- und Schließrichtung verschiebbar angeordnet ist, die an jeder ihrer Seiten ein Blasformteil (26b, 28b; 126b, 128b; 226b, 228b) trägt, und jedes dieser beiden Blasformteile mit einem Blasformteil, das jeweils von einer benachbarten Trägerplatte getragen wird, eine Blasform bildet und jede der Blasformen (26a,b; 28a,b; 126a,b; 128a,b; 228a,b) mit einer Verriegelungs-Einrichtung (30, 32; 130, 132; 230, 232) versehen ist, mittels welcher die jeweilige Blasform in ihrem Schließzustand verriegelbar ist, und das Schließgestell (10; 110; 210) mit wenigstens einer Gleichlaufeinrichtung (48) versehen ist, durch welche die Schließ- und Öffnungsbewegungen der Teile der jeweiligen Blasform symmetrisch erfolgen, wobei mittels der Verriegelungs-Einrichtung der Bewegungsablauf der Trägerplatten gesteuert wird.

7. Vorrichtung nach Anspruch 6, **dadurch gekennzeichnet, daß** sie mit drei Trägerplatten (25; 125; 225) versehen ist.

8. Vorrichtung nach Anspruch 6, **dadurch gekennzeichnet, daß** die Komponenten der Verriegelungseinrichtung (30, 32; 130, 132; 230, 232) für jede Blasform (26a, 26b; 28a, 28b; 126a, 126b; 128a, 128b; 226a, 226b; 228a, 228b) an den zugehörigen Trägerplatten (20, 25; 24, 25; 120, 135; 124, 125; 220, 225; 224, 225) an der jeweiligen Blaform befestigt sind.

9. Vorrichtung nach Anspruch 6, **dadurch gekennzeichnet, daß** die Verriegelungseinrichtungen (30, 32; 130, 132; 230, 232) an den Blasformteilen der jeweiligen Blasform (26a, 26b; 28a, 28b; 126a, 126b; 128a, 128b; 226a, 226b; 228a, 228b) angebracht sind.

10. Vorrichtung nach Anspruch 6, **dadurch gekennzeichnet, daß** das Schließgestell (110) verschiebbar ist, um die Blasformen (126a, b, 128a, b) wechselweise in eine Aufnahmeposition (A) zu bringen, in welcher sie einen Vorformling aufnehmen.

11. Vorrichtung nach Anspruch 6, **dadurch gekennzeichnet, daß** jeder der beiden Blasformen (26a, b, 28a, b) eine eigene Aufnahmeposition (A bzw. B) für die Aufnahme eines Vorformlings zugeordnet ist.

12. Vorrichtung nach Anspruch 6, **dadurch gekennzeichnet, daß** die Gleichlaufeinrichtung (48) zwischen zwei Trägerplatten (20, 24) wirksam ist, die Formteile (26a, 28a) verschiedener Blasformen (26a, b, 28a, b) tragen.

13. Vorrichtung nach Anspruch 6, **dadurch gekennzeichnet, daß** jede Blasform (226a, b; 228a, b) mit einer Gleichlaufeinrichtung (256, 258) zum Positionieren von Funktionsteilen (270) versehen ist, deren Verbindungselement (260) in Richtung der Öffnungs- und Schließbewegungen verschiebbar ist.

## Claims

1. A process for the production of hollow bodies from thermoplastic material by means of blow moulding of preforms using a closing support structure (10; 110; 210) which has blow moulding moulds with two blow moulding mould portions (26a, 28a; 126a, 128a; 226a, 228a) which are reciprocatable between an open condition that they are a spacing from each other and a closed condition in which they define a mould cavity, by a common drive means (15) which engages a drive plate (16; 116, 216) and a first carrier plate (20; 120; 220) and is arranged between the drive plate and the first carrier plate, the first carrier plate carries a blow moulding mould portion (26a; 126a; 226a) and the drive plate (16; 116; 216) is connected to a second carrier plate (24; 124; 224) carrying a blow moulding mould portion (28a, 128a; 228a), **characterised in that** arranged displaceably in the opening and closing direction between the first carrier plate (20; 120; 220) and the second carrier plate (24; 124; 224) is at least one further carrier plate (25; 125; 225) which at each of its sides carries a blow moulding mould portion (26b, 28b; 126b, 128b; 226b, 228b), and each of said two blow moulding mould portions with a blow moulding mould portion which is carried by a respective adjacent carrier plate forms a blow moulding mould and provided for each of the blow moulding moulds (26a, b; 28a, b; 126a, b; 128a, b; 228a, b) is a locking device (30, 32; 130, 132; 230, 232) by means of which the respective blow moulding mould can be locked in its closed condition, and the closing support structure (10; 110; 210) is provided with at least one synchronisation arrangement (48) by which the closing and opening movements of the portions of the respective blow moulding mould take place symmetrically, wherein the operating movements of the carrier plates are influenced by means of the locking device.

2. A process according to claim 1 **characterised in that** the locking devices (30, 32; 130, 132; 230, 232) for each blow moulding mould are operative between the carrier plates (20, 25; 24, 25; 120, 125; 124, 125; 220, 225; 224, 225) of the respective blow moulding mould (26a, 26b; 28a, 28b; 126a, 126b; 128a, 128b; 226a, 226b; 228a, 228b).

3. A process according to claim 1 **characterised in that** the locking devices are a component part of the blow moulding moulds and are directly operative between the two blow moulding mould portions.

4. A process according to claim 1 **characterised in that** the movement of the blow moulding mould portions (26a, 26b; 28a, 28b; 126a, 126b; 128a, 128b; 226a, 226b; 228a, 228b) for closing the preform and/or for squeezing off excess material on the preform is produced by the common drive means (15; 115; 215) for the blow moulding mould portions.

5. A process according to claim 1 **characterised in that** the closing support structure (10) can be displaced between at least two positions in such a way that one of the at least two blow moulding moulds (126a, 126b; 128a, 128b) is in a common receiving position (X) in which the respective blow moulding mould disposed there receives a preform.

6. Apparatus for producing hollow bodies from thermoplastic material by means of blow moulding of preforms, which is provided with a closing support structure (10; 110; 210) which has blow moulding moulds with two blow moulding mould portions (26a, 28a; 126a, 128a; 226a, 228a) which are reciprocatable between an open condition that they are a spacing from each other and a closed condition in which they define a mould cavity, by a common drive means (15), wherein the drive means (15) engages a drive plate (16; 116, 216) and a first carrier plate (20; 120; 220) and is arranged between the drive plate and the first carrier plate, the first carrier plate carries a blow moulding mould portion (26a; 126a; 226a) and the drive plate (16; 116; 216) is connected to a second carrier plate (24; 124; 224) carrying a blow moulding mould portion (28a, 128a; 228a), **characterised in that** arranged displaceably in the opening and closing direction between the first carrier plate (20; 120; 220) and the second carrier plate (24; 124; 224) is at least one further carrier plate (25; 125; 225) which at each of its sides carries a blow moulding mould portion (26b, 28b; 126b, 128b; 226b, 228b), and each of said two blow moulding mould portions with a blow moulding mould portion which is carried by a respective adjacent carrier plate forms a blow moulding mould and each of the blow moulding moulds (26a, b; 28a, b; 126a, b; 128a, b; 228a, b) is provided with a locking device (30, 32; 130, 132; 230, 232) by means of which the respective blow moulding mould is lockable in its closed condition, and the closing support structure (10; 110; 210) is provided with at least one synchronisation arrangement (48) by which the closing and opening movements of the portions of the respective blow moulding mould take place symmetrically, wherein the operating movements of the carrier plates are influenced by means of the locking device.

7. Apparatus according to claim 6 **characterised in that** it is provided with three carrier plates (25; 125; 225).

8. Apparatus according to claim 6 **characterised in that** the components of the locking device (30, 32; 130, 132; 230, 232) for each blow moulding mould (26a, 26b; 28a, 28b; 126a, 126b; 128a, 128b; 226a, 226b; 228a, 228b) are secured to the associated carrier plates (20, 25; 24, 25; 120, 135; 124, 125; 220, 225; 224, 225) at the respective blow moulding mould.

9. Apparatus according to claim 6 **characterised in that** the locking devices (30, 32; 130, 132; 230, 232) are mounted to the blow moulding mould portions of the respective blow moulding mould (26a, 26b; 28a, 28b; 126a, 126b; 128a, 128b; 226a, 226b; 228a, 228b).

10. Apparatus according to claim 6 **characterised in that** the closing support structure (110) is displaceable to move the blow moulding moulds (126a, b, 128a, b) alternately into a receiving position (A) in which they receive a preform.

11. Apparatus according to claim 6 **characterised in that** associated with each of the two blow moulding moulds (26a, b, 28a, b) is its own receiving position (A and B respectively) for receiving a preform.

12. Apparatus according to claim 6 **characterised in that** the synchronisation arrangement (48) is operative between two carrier plates (20, 24) which carry mould portions (26a, 28a) of different blow moulding moulds (26a, b, 28a, b).

13. Apparatus according to claim 6 **characterised in that** each blow moulding mould (226a, b; 228a, b) is provided with a synchronisation device (256, 258) for positioning functional members (270) whose connecting element (260) is displaceable in the direction of the opening and closing movements.

## Revendications

1. Procédé pour la fabrication de pièces creuses en un matériau thermoplastique au moyen de moules de soufflage de préformes à l'aide d'un cadre fermé (10 ; 110 ; 210), qui comprend des moules de soufflage ayant deux parties de moule de soufflage (26a, 28a ; 126a, 128a ; 226a, 228a) qui peuvent être déplacées alternativement entre une position ouverte, dans laquelle elles sont à distance l'une de l'autre, et une position fermée, dans laquelle elles forment une cavité de moulage, par un moyen d'entraînement commun (15), qui s'engage avec une plaque d'entraînement (16 ; 116 ; 216) et une première plaque de support (20 ; 120 ; 220) et est agencé entre la plaque d'entraînement et la première plaque de support, la première plaque de support portant une partie de moule de soufflage (26a ; 126a ; 226a) et la plaque d'entraînement (16 ; 116 ; 216) étant reliée à une deuxième plaque de support (24 ; 124 ; 224) portant une partie de moule de soufflage (28a ; 128a ; 228), **caractérisé en ce que**, entre la première plaque de support (20 ; 120 ; 220) et la deuxième plaque de support (24 ; 124 ; 224), au moins une plaque de support supplémentaire (25 ; 125 ; 225) est agencée de façon à pouvoir coulisser dans la direction d'ouverture et de fermeture, laquelle porte sur chacun de ses côtés une partie de moule de soufflage (26b, 28b ; 126b, 128b ; 226b, 228b), chacune de ces deux parties de moule de soufflage formant un moule de soufflage avec une partie de moule de soufflage qui est portée respectivement par une plaque de support adjacente et un dispositif de verrouillage (30, 32 ; 130, 132 ; 230, 232) étant prévu pour chacun des moules de soufflage (26a, b ; 28a, b ; 126a, B, 128a, b ; 228a, b), au moyen duquel le moule de soufflage respectif peut être verrouillé dans sa position fermée, et le cadre fermé (10 ; 110 ; 210) est muni d'au moins un dispositif de synchronisation (48), par lequel les mouvements de fermeture et d'ouverture des parties du moule de soufflage respectif s'effectuent de façon symétrique, le déroulement du mouvement des plaques de support étant influencé au moyen du dispositif de verrouillage.

2. Procédé selon la revendication 1, **caractérisé en ce que** les dispositifs de verrouillage (30, 32 ; 130, 132 ; 230, 232) relatifs à chaque moule de soufflage agissent entre les plaques de support (20, 25 ; 24, 25 ; 120, 125 ; 124, 125 ; 220, 225 ; 224, 225) du moule de soufflage respectif (26a, 26b ; 28a, 28b ; 126a, 126b ; 128a, 128b ; 226a, 226b ; 228a, 228b).

3. Procédé selon la revendication 1, **caractérisé en ce que** les dispositifs de verrouillage font partie intégrante des moules de soufflage et agissent directement entre les deux parties des moules de soufflage.

4. Procédé selon la revendication 1, **caractérisé en ce que** le déplacement des parties de moule de soufflage (26a, 26b ; 28a, 28b ; 126a, 126b ; 128a, 128b ; 226a, 226b ; 228a, 228b) pour la fermeture de la préforme et/ou pour la compression de matériau excédentaire dans la préforme est produit par le moyen d'entraînement commun (15 ; 115 ; 215) pour les parties de moule de soufflage.

5. Procédé selon la revendication 1, **caractérisé en ce que** le cadre fermé (110) peut coulisser entre au moins deux positions de telle sorte que l'un des au moins deux moules de soufflage (126a, 126b ; 128a, 128b) se trouve dans une position de réception commune (X), dans laquelle le moule de soufflage respectif situé à cet endroit reçoit une préforme.

6. Dispositif pour la fabrication de pièces creuses en un matériau thermoplastique au moyen de moules de soufflage de préformes, qui est muni d'un cadre fermé (10 ; 110 ; 210) qui comprend des moules de soufflage ayant deux parties de moule de soufflage (26a, 28a ; 126a, 128a ; 226a, 228a) qui peuvent être déplacées alternativement entre une position ouverte, dans laquelle elles sont à distance l'une de l'autre, et une position fermée, dans laquelle elles forment une cavité de moulage, par un moyen d'entraînement commun (15), où le moyen d'entraînement (15) s'engage avec une plaque d'entraînement (16 ; 116 ; 216) et une première plaque de support (20 ; 120 ; 220) et est agencé entre la plaque d'entraînement et la première plaque de support, la première plaque de support portant une partie de moule de soufflage (26a ; 126a ; 226a) et la plaque d'entraînement (16 ; 116 ; 216) étant reliée à une deuxième plaque de support (24 ; 124 ; 224) portant une partie de moule de soufflage (28a ; 128a ; 228a), **caractérisé en ce que**, entre la première plaque de support (20 ; 120 ; 220) et la deuxième plaque de support (24 ; 124 ; 224), au moins une plaque de support supplémentaire (25 ; 125 ; 225) est agencée de façon à pouvoir coulisser dans la direction d'ouverture et de fermeture, laquelle porte sur chacun de ses côtés une partie de moule de soufflage (26b, 28b ; 126b, 128b ; 226b, 228b), chacune de ces deux parties de moule de soufflage formant un moule de soufflage avec une partie de moule de soufflage qui est portée respectivement par une plaque de support adjacente et chacun des moules de soufflage (26a, b ; 28a, b ; 126a, b, 128a, b ; 228a, b) étant muni d'un dispositif de verrouillage (30, 32 ; 130, 132 ; 230, 232), au moyen duquel le moule de soufflage respectif peut être verrouillé dans sa position fermée, et le cadre fermé (10 ; 110 ; 210) est muni d'au moins un dispositif de synchronisation (48), par lequel les mouvements de fermeture et d'ouverture des parties du moule de soufflage respectif s'effectuent de façon symétrique, le déroulement du mouvement des plaques de support étant influencé au moyen du dispositif de verrouillage.

7. Dispositif selon la revendication 6, **caractérisé en ce qu'**il est muni de trois plaques de support (25 ; 125 ; 225).

8. Dispositif selon la revendication 6, **caractérisé en ce que** les composants du dispositif de verrouillage (30, 32 ; 130, 132 ; 230, 232) pour chaque moule de soufflage (26a, 26b ; 28a, 28b ; 126a, 126b ; 128a, 128b ; 226a, 226b ; 228a, 228b) sont fixés sur les plaques de support correspondantes (20, 25 ; 24, 25 ; 120, 125 ; 124, 125, 220, 225 ; 224, 225) pour le moule de soufflage respectif.

9. Dispositif selon la revendication 6, **caractérisé en ce que** les dispositifs de verrouillage (30, 32 ; 130, 132 ; 230, 232) sont installés sur les parties de moule de soufflage du moule de soufflage respectif (26a, 26b ; 28a, 28b ; 126a, 126b ; 128a, 128b ; 226a, 226b ; 228a, 228b).

10. Dispositif selon la revendication 6, **caractérisé en ce que** le cadre fermé (110) peut coulisser afin de placer les moules de soufflage (126a, b, 128a, b) alternativement dans une position de réception (A), dans laquelle ils reçoivent une préforme

11. Dispositif selon la revendication 6, **caractérisé en ce qu'**une position de réception spécifique (A ou B) est affectée à chacun des deux moules de soufflage (26a, b, 28a, b) pour la réception d'une préforme.

12. Dispositif selon la revendication 6, **caractérisé en ce que** le dispositif de synchronisation (48) agit entre deux plaques de support (20, 24) qui portent des parties de moule (26a, 28a) de moules de soufflage (26a, b, 28a, b) différentes.

13. Dispositif selon la revendication 6, **caractérisé en ce que** chaque moule de soufflage (226a, b ; 228a, b) est muni d'un dispositif de synchronisation (256, 258) pour le positionnement de parties fonctionnelles (270), dont l'élément de jonction (260) peut coulisser dans la direction des mouvements d'ouverture et de fermeture.
